# EUROPÄISCHE PATENTANMELDUNG

(11) **EP 4 050 280 A1**
(43) Veröffentlichungstag der Anmeldung: **31.08.2022**
(21) Anmeldenummer: 22157668.9
(22) Anmeldetag: 21.02.2022
(51) Int. Cl.: F24H 1/18, F24H 9/02, F24H 9/06, F24H 9/14, B29C 44/12, B29C 44/18, F24H 4/04, B29L 31/00

(54) **BEHÄLTER, HEIZGERÄT MIT DEM BEHÄLTER UND VERFAHREN ZUR HERSTELLUNG DES BEHÄLTERS**

(30) Priorität: 24.02.2021 DE 102021104404
(71) Anmelder: Robert Bosch GmbH, 70442 Stuttgart (DE)
(72) Erfinder: Roth, Joerg, 57299 Burbach (DE); Beca, Nuno, 3840-324 Ponte de Vagos (PT); Pereira, Pedro, 3810-617 Aveiro (PT)

(57) **Zusammenfassung**

Die Erfindung betrifft einen Behälter (15), ein Heizgerät (10) mit dem Behälter (15) und ein Verfahren zur Herstellung des Behälters (15), wobei der Behälter (15) einen Speichertank (25), der mit Wasser, insbesondere mit Warmwasser oder mir Kaltwasser füllbar ist, eine Schaumummantelung (30) zur thermischen Isolierung des Speichertanks (25) und eine erste Stützeinheit (40) aufweist, wobei die erste Stützeinheit (40) an dem Speichertank (25) anliegt und ausgebildet ist, eine Gewichtskraft des Speichertanks (25) zumindest teilweise abzustützen, wobei der Speichertank (25) und die erste Stützeinheit (40) zumindest abschnittsweise in der Schaumummantelung (30) eingebettet sind, wobei die Schaumummantelung (30) die erste Stützeinheit (40) an dem Speichertank (25) fixiert.

## Beschreibung

Die Erfindung betrifft einen Behälter gemäß Patentanspruch 1, ein Heizgerät mit dem Behälter gemäß Patentanspruch 10 und ein Verfahren zur Herstellung des Behälters gemäß Patentanspruch 11.

### Stand der Technik

Aus EP 3 462 103 B1 ist eine Warmwasserversorgungseinheit mit einem Heizmechanismus, der konfiguriert ist, ein Heizmedium aufzuheizen, einem Tank, der konfiguriert ist, durch das Heizmedium aufgeheiztes Wasser zu speichern, einem Wärmeisolator, der den Tank umgibt, einem Hauptrahmen, der den Heizmechanismus so hält, dass dieser sich an einer Position über dem Tank und dem Wärmeisolator befindet und einer Trägerplatte bekannt. Die Trägerplatte ist zwischen dem Wärmeisolator und dem Hauptrahmen angeordnet.

### Offenbarung der Erfindung

Es ist Aufgabe der Erfindung, einen verbesserten Behälter, ein verbessertes Heizgerät und ein verbessertes Verfahren zur Herstellung solch eines Behälters bereitzustellen.

Diese Aufgabe wird mittels eines Behälters gemäß Patentanspruch 1, mittels eines Heizgeräts gemäß Patentanspruch 10 und mittels eines Verfahrens gemäß Patentanspruch 11 gelöst. Vorteilhafte Ausführungsformen sind in den abhängigen Ansprüchen angegeben.

Es wurde erkannt, dass ein verbesserter Behälter für ein Heizgerät dadurch bereitgestellt werden kann, dass der Behälter einen Speichertank, der mit Wasser, insbesondere mit Warmwasser oder Kaltwasser, füllbar ist, eine Schaumummantelung zur thermischen Isolierung des Speichertanks und eine erste Stützeinheit aufweist. Die erste Stützeinheit liegt an dem Speichertank anliegt und ist ausgebildet, eine Masse des Speichertanks und des im Speichertank speicherbaren Wassers zumindest teilweise abzustützen. Der Speichertank und die erste Stützeinheit sind zumindest abschnittsweise in der Schaumummantelung eingebettet. Die Schaumummantelung fixiert die erste Stützeinheit an dem Speichertank.

Über die erste Stützeinheit kann eine besonders große Masse aus dem Speichertank abgestützt werden, sodass ein Volumen des Speichertanks besonders groß gewählt werden kann.

Ferner ist eine Wärmeübertragung zwischen dem Speichertank und einer Umgebung durch die Schaumummantelung stark gehemmt. Des Weiteren wird eine Wärmeübertragung über die erste Stützeinheit durch die ummantelte erste Stützeinheit reduziert, sodass dadurch das im Speichertank gespeicherte Warmwasser besonders lange warm bleibt oder eine Erwärmung des im Speichertank gespeicherten Kaltwassers nur langsam erfolgt.

Ein weiterer Vorteil ist, dass auf Befestigungsmittel zur mechanischen Verbindung der ersten Stützeinheit mit dem Speichertank verzichtet werden kann und dadurch der Behälter besonders einfach und kostengünstig herstellbar ist.

In einer weiteren Ausführungsform weist der Behälter eine zweite Stützeinheit auf, wobei die zweite Stützeinheit versetzt zu der ersten Stützeinheit und seitlich neben dem Speichertank angeordnet ist. Die zweite Stützeinheit liegt an einer äußeren Umfangsseite des Speichertanks an. Die zweite Stützeinheit ist zumindest abschnittsweise in der Schaumummantelung eingebettet und die Schaumummantelung befestigt die zweite Stützeinheit an dem Speichertank. Diese Ausgestaltung hat den Vorteil, dass auf weitere Befestigungsmittel zu mechanischen Verbindung der zweiten Stützeinheit mit dem Speichertank verzichtet werden kann.

In einer weiteren Ausführungsform weist die erste Stützeinheit ein erstes Lastträgerteil und ein versetzt zu dem ersten Lastträgerteil angeordnetes zweites Lastträgerteil sowie wenigstens eine erste Querstrebe auf. Das erste Lastträgerteil weist auf einer dem zweiten Lastträgerteil zugewandten ersten Seite eine erste Durchgangsöffnung und das zweite Lastträgerteil auf einer zum ersten Lastträgerteil zugewandten zweiten Seite eine zweite Durchgangsöffnung auf. Die erste Querstrebe durchgreift an einer ersten Querseite die erste Durchgangsöffnung und an einer zur ersten Querseite gegenüberliegenden zweiten Querseite die zweite Durchgangsöffnung. Die erste Querstrebe liegt auf dem ersten Lastträgerteil und auf dem zweiten Lastträgerteil auf und verbindet das erste Lastträgerteil mit dem zweiten Lastträgerteil. Die gesteckte Ausgestaltung hat den Vorteil, dass die erste Stützeinheit in der Herstellung besonders einfach und kostengünstig hergestellt werden kann. Insbesondere ist eine automatisierte Fertigung dadurch möglich.

In einer weiteren Ausführungsform weist die erste Stützeinheit eine zweite Querstrebe auf. Die zweite Querstrebe ist versetzt zu der ersten Querstrebe angeordnet. Das erste Lastträgerteil weist auf der dem zweiten Lastträgerteil zugewandten ersten Seite eine dritte Durchgangsöffnung und das zweite Lastträgerteil auf der zum ersten Lastträgerteil zugewandten zweiten Seite eine vierte Durchgangsöffnung auf. Die zweite Querstrebe durchgreift an einer dritten Querseite die dritte Durchgangsöffnung und an einer zur dritten Querseite gegenüberliegenden vierten Querseite die vierte Durchgangsöffnung. Die zweite Querstrebe liegt auf dem ersten Lastträgerteil und auf dem zweiten Lastträgerteil auf. Die zweite Querstrebe das erste Lastträgerteil mit dem zweiten Lastträgerteil. Diese Ausgestaltung hat den Vorteil, dass die erste Stützeinheit besonders steif ist.

Von besonderem Vorteil ist, wenn die erste Querstrebe ein U-Profil aufweist, wobei die erste Querstrebe vorzugsweise derart ausgerichtet ist, dass das U-Profil auf der zum Speichertank zugewandten Seite offen ist. Dadurch wird eine Durchbiegung der ersten Querstrebe besonders geringgehalten.

In einer weiteren Ausführungsform weist die Schaumummantelung eine erste Seitenfläche auf, wobei das erste Lastträgerteil eine zweite Seitenfläche aufweist, die bündig mit der ersten Seitenfläche abschließt. Dadurch ist der Behälter besonders kompakt ausgebildet. Ferner sind Befestigungspunkte zur Befestigung eines Hauptrahmens an dem ersten Seitenteil in der Fertigung leicht auffindbar. Ferner wird, wenn eine Verkleidung an dem Hauptrahmen befestigt wird, ein Verhaken der Verkleidung an dem ersten Seitenteil verhindert.

In einer weiteren Ausführungsform ist die Schaumummantelung stoffschlüssig mit einer äußeren Umfangsseite des Speichertanks verbunden. Die Schaumummantelung ist ferner stoffschlüssig mit der ersten Stützeinheit verbunden. Die Schaumummantelung verbindet mechanisch den Speichertank mit der ersten Stützeinheit. Dadurch kann auf weitere Befestigungsmittel zur direkten mechanischen Verbindung der ersten Stützeinheit mit dem Speichertank verzichtet werden.

In einer weiteren Ausführungsform ist die Schaumummantelung stoffschlüssig mit einer äußeren Umfangsseite des Speichertanks verbunden. Die Schaumummantelung ist ferner stoffschlüssig mit der zweiten Stützeinheit verbunden. Die Schaumummantelung verbindet mechanisch den Speichertank mit der zweiten Stützeinheit. Dadurch kann auf weitere Befestigungsmittel zur direkten mechanischen Verbindung der zweiten Stützeinheit mit dem Speichertank verzichtet werden.

In einer weiteren Ausführungsform weist der Behälter einen Hauptrahmen mit einer ersten Trägereinheit und einer zweiten Trägereinheit auf, wobei der Speichertank zwischen der ersten Trägereinheit und der zweiten Trägereinheit angeordnet ist. Die erste Stützeinheit verbindet die erste Trägereinheit mit der zweiten Trägereinheit. Das erste Lastträgerteil ist an der ersten Trägereinheit und das zweite Lastträgerteil ist an der zweiten Trägereinheit befestigt. Die erste Stützeinheit verbindet die erste Trägereinheit mit der zweiten Trägereinheit. Diese Ausgestaltung hat den Vorteil, dass der Hauptrahmen und die Trägereinheit besonders einfach und kostengünstig ausgebildet sein können.

Es wurde erkannt, dass ein verbessertes Heizgerät, insbesondere ein Standgerät, dadurch bereitgestellt werden kann, dass das Heizgerät einen Behälter, der wie oben beschrieben ausgebildet ist, und eine Heizeinrichtung aufweist, wobei die Heizeinrichtung ausgebildet ist, das Wasser zu erwärmen und dem Speichertank zuzuführen. Die Heizeinrichtung ist versetzt zu dem Speichertank auf einer der ersten Stützeinheit abgewandten Seite angeordnet. Die Heizeinrichtung weist vorzugsweise eine Wärmepumpe auf.

Besonders einfach und kostengünstig kann der Behälter dadurch hergestellt werden, dass der Speichertank und die erste Stützeinheit bereitgestellt werden. Der Speichertank und die erste Stützeinheit werden in eine Form eingebracht. Ferner wird in die Form ein Schaumwerkstoff eingebracht. Der Schaumwerkstoff schäumt auf und/oder wird aufgeschäumt. Der Schaumwerkstoff umschließt den Speichertank und die erste Stützeinheit zumindest abschnittsweise. Der Schaumwerkstoff wird zur Schaumummantelung ausgehärtet und die Schaumummantelung fixiert die erste Stützeinheit mechanisch an dem Speichertank.

Nachfolgend wird die Erfindung anhand von Figuren näher erläutert. Dabei zeigen:
Fig. 1 eine schematische Darstellung eines Heizgeräts;
Fig. 2 eine Explosionsdarstellung einer ersten Stützeinheit des in Fig. 1 gezeigten Heizgeräts;
Fig. 3 eine Explosionsdarstellung der in Fig. 2 gezeigten ersten Stützeinheit;
Fig. 4 eine perspektivische Darstellung einer zweiten Stützeinheit des in Fig. 1 gezeigten Heizgeräts;
Fig. 5 eine perspektivische Darstellung des Heizgeräts;
Fig. 6 eine perspektivische Darstellung einer Form während eines fünften Verfahrensschritts; und
Fig. 7 eine perspektivische Darstellung der Form nach einem sechsten Verfahrensschritt.

In den nachfolgenden Figuren wird auf ein Koordinatensystem Bezug genommen. Das Koordinatensystem weist eine x-Achse (Längsrichtung), eine y-Achse (Querrichtung) und eine z-Achse (Höhenrichtung) auf. Das Koordinatensystem ist beispielhaft als Rechtssystem ausgebildet.

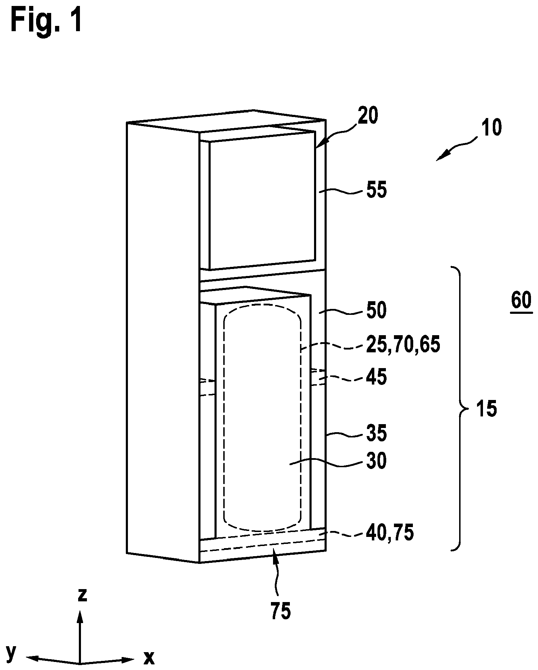

Fig. 1 zeigt eine schematische Darstellung eines Heizgeräts 10.

Das Heizgerät 10 ist in Fig. 1 beispielhaft als Standgerät ausgebildet. Das Heizgerät 10 weist einen Behälter 15 und eine Heizeinrichtung 20 auf. Beispielhaft ist in dem Heizgerät 10 der Behälter 15 unterhalb der Heizeinrichtung 20 angeordnet. Die Heizeinrichtung 20 kann beispielsweise eine Wärmepumpe aufweisen.

Der Behälter 15 weist einen Speichertank 25, eine Schaumummantelung 30, einen Hauptrahmen 35, eine erste Stützeinheit 40 und vorzugsweise eine zweite Stützeinheit 45 auf. Der Hauptrahmen 35 begrenzt einen Innenraum 55. An dem Hauptrahmen 35 kann eine Verkleidung 50 befestigt sein, um den Innenraum 55 gegenüber einer Umgebung 60 abzugrenzen und zu schützen. In dem Innenraum 55 sind die Heizeinrichtung 20, der Speichertank 25, die Schaumummantelung 30, der Hauptrahmen 35 sowie die erste und zweite Stützeinheit 40, 45 angeordnet. Beispielhaft ist die Heizeinrichtung 20 an dem Hauptrahmen 35 des Behälters 15 befestigt. Auch kann die Heizeinrichtung 20 außerhalb des Innenraums 55 positioniert sein. Dabei kann beispielsweise der Behälter 15 als Pufferspeicher, Brauchwasserspeicher, Warmwasserspeicher zur Speicherung warmen Wassers, insbesondere Trinkwassers, oder als Kaltwasserspeicher zur Speicherung kalten Wassers, insbesondere Trinkwasser, ausgebildet sein.

Die Heizeinrichtung 20 ist beispielsweise ausgebildet das im Speichertank 25 gespeicherte Wasser zu erwärmen.

Die erste Stützeinheit 40 ist unterhalb des Speichertanks 25 angeordnet und stützt eine Masse bzw. eine Gewichtskraft des Speichertanks 25 sowie des im Speichertank 25 angeordneten Wassers aus dem Speichertank 25 ab. Die zweite Stützeinheit 45 ist beispielsweise neben einer oberen Hälfte des Speichertanks 25, seitlich des Speichertanks 25 angeordnet und stützt den Speichertank 25 an dem Hauptrahmen 35 ab, um ein Umkippen des Speichertanks 25 zu verhindern.

Die Schaumummantelung 30 kann beispielsweise einen der folgenden Werkstoffe aufweisen: Polystyrol, Polyurethan, Hartschaum, geschlossenporigen Schaum, Schaum mit einer Steifigkeit von 10 N/cm² - 30 N/cm². Die Schaumummantelung 30 isoliert thermisch den Speichertank 25 und das im Speichertank 25 befindliche Wasser gegenüber dem übrigen Innenraum 55 und gegenüber der Umgebung 60. Dadurch wird ein ungewolltes Abkühlen des im Speichertank 25 befindlichen Wassers oder eine ungewollte Erwärmung des im Speichertank 25 befindlichen Wassers in montiertem Zustand des Behälters 15 reduziert.

In der Schaumummantelung 30 sind sowohl die erste Stützeinheit 40 als auch die zweite Stützeinheit 45 zumindest abschnittsweise eingebettet. Dabei wird unter einer Einbettung verstanden, dass zumindest bereichsweise die erste Stützeinheit 40 und/oder die zweite Stützeinheit 45 vollständig durch die Schaumummantelung 30 umschlossen ist/sind.

Vorzugsweise weist die Schaumummantelung 30 einerseits eine erste stoffschlüssige Verbindung 70 zu einer äußeren Umfangsseite 65 des Speichertanks 25 auf. Durch die erste stoffschlüssige Verbindung 70 ist die Schaumummantelung 30 mit der äußeren Umfangsseite 65 mechanisch verbunden.

Die erste Stützeinheit 40 ist zumindest abschnittsweise in der Schaumummantelung 30 eingebettet. Dabei weist die erste Stützeinheit 40 eine zweite stoffschlüssige Verbindung 75 zu der Schaumummantelung 30 auf. Durch die zweite stoffschlüssige Verbindung 75 ist die erste Stützeinheit 40 mechanisch mit der Schaumummantelung 30 verbunden. Durch die steif ausgebildete Schaumummantelung 30 verbindet die Schaumummantelung 30 mechanisch die erste Stützeinheit 40 mit dem Speichertank 25. Des Weiteren kann zusätzlich auch die erste Stützeinheit 40 direkt mit dem Speichertank 25, beispielsweise an einem Befestigungsflansch des Speichertanks 25 mechanisch befestigt sein. Auf die direkte mechanische Verbindung zwischen der ersten Stützeinheit 40 und dem Speichertank 25 kann aufgrund der besonders tragfähigen Ausgestaltung der Schaumummantelung 30 in der Ausführungsform verzichtet werden, sodass die erste Stützeinheit 40 nur indirekt mechanisch über die Schaumummantelung 30 mit dem Speichertank 25 verbunden ist.

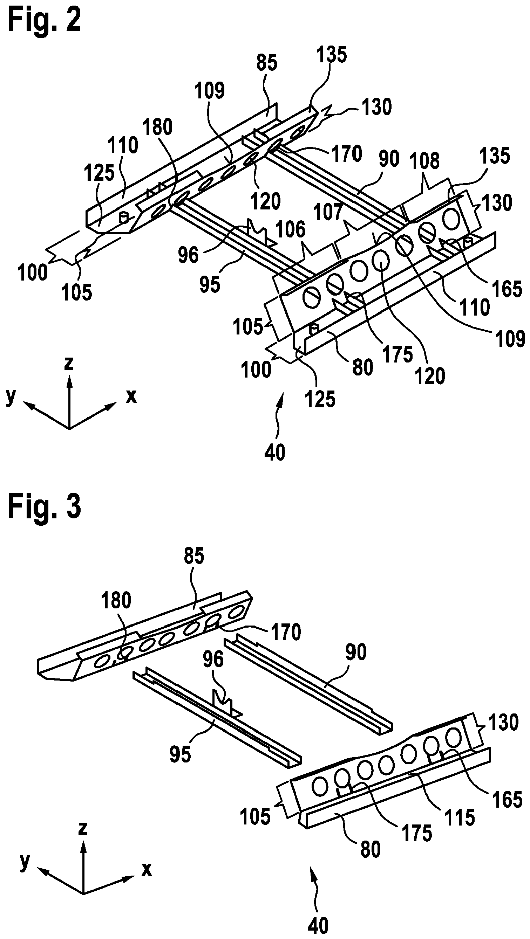

Fig. 2 zeigt eine Explosionsdarstellung der ersten Stützeinheit 40.

Die erste Stützeinheit 40 weist ein erstes Lastträgerteil 80, ein zweites Lastträgerteil 85, wenigstens eine erste Querstrebe 90 und vorzugsweise zusätzlich eine zweite Querstrebe 95 auf. Das erste Lastträgerteil 80 erstreckt sich im Wesentlichen in Längsrichtung. In Querrichtung (y-Richtung) ist das zweite Lastträgerteil 85 gegenüberliegend zum ersten Lastträgerteil 80 angeordnet. Dabei sind das erste Lastträgerteil 80 und das zweite Lastträgerteil 85 beispielhaft parallel zueinander ausgerichtet.

Zwischen dem ersten Lastträgerteil 80 und dem zweiten Lastträgerteil 85 sind die erste Querstrebe 90 und die zweite Querstrebe 95 angeordnet. Die erste Querstrebe 90 ist beabstandet zu der zweiten Querstrebe 95 angeordnet. Ein Abstand in x-Richtung zwischen der ersten Querstrebe 90 und der zweiten Querstrebe 95 ist so gewählt, dass ein Tankauslauf des Speichertanks 25 (nicht in den Figuren dargestellt) zwischen der ersten Querstrebe 90 und der zweiten Querstrebe 95 positioniert werden kann.

Die erste Querstrebe 90 und die zweite Querstrebe 95 sind beispielhaft zueinander identisch ausgebildet. Dabei kann die erste Querstrebe 90 und/oder die zweite Querstrebe 95 ein U-Profil aufweisen und aus einem Metall gefertigt sein. Vorzugsweise ist die erste und/oder zweite Querstrebe 90, 95 aus einem Blechmaterial gefertigt. Das U-Profil der ersten und/oder zweiten Querstrebe 90, 95 ist derart ausgerichtet, dass das U-Profil auf der zum Speichertank 25 zugewandten Seite offen ist. An der ersten Querstrebe 90 und/oder der zweiten Querstrebe 95 kann oberseitig ein Ausrichtungselement 111 befestigt sein.

Das erste Lastträgerteil 80 und das zweite Lastträgerteil 85 sind strukturell beispielshaft im Wesentlichen identisch ausgebildet. Vorzugsweise sind das erste Lastträgerteil 80 und das zweite Lastträgerteil 85 jeweils einstückig und materialeinheitlich ausgebildet. Im Folgenden wird auf die strukturelle Ausgestaltung des ersten Lastträgerteils 80 eingegangen. Das für das erste Lastträgerteil 80 Erläuterte gilt entsprechend ebenso für das zweite Lastträgerteil 85.

Das erste Lastträgerteil 80 weist einen ersten Profilabschnitt 100 und einen ersten Einbettungsabschnitt 105 auf. Der erste Einbettungsabschnitt 105 weist einen ersten Teilbereich 106, einen in x-Richtung an den ersten Teilbereich 106 sich anschließenden zweiten Teilbereich 107 und einen sich in x-Richtung auf einer zum ersten Teilbereich 106 abgewandten Seite an den zweiten Teilbereich 107 anschließenden dritten Teilbereich 108.

Der erste Teilbereich 106 und der dritte Teilbereich 108 sind L-förmig ausgebildet. Der zweite Teilbereich 107 ist plattenförmig ausgebildet. Ein langer Abschnitt 130 des ersten Einbettungsabschnitts 105 ist als Lochblech ausgebildet und erstreckt sich über den ersten bis dritten Teilbereich 106, 107, 180. In dem langen Abschnitt 130 sind vorzugsweise mehrere, erste Öffnungen 120 angeordnet. Der lange Abschnitt 130 schließt sich unterseitig an den ersten Profilabschnitt 100 an. Ein kurzer Abschnitt 135 des ersten Einbettungsabschnitts 105 ist oberseitig anschließend an den langen Abschnitt 130 im ersten und dritten Teilbereich 106, 108 angeordnet und ist geneigt zu dem langen Abschnitt 130 ausgerichtet. Vorzugsweise sind der lange Abschnitt 130 und der kurze Abschnitt 135 rechtwinklig zueinander ausgebildet. Der kurze Abschnitt 135 ist vom jeweils gegenüberliegenden zweiten Lastträgerteil 85 weg verlaufend vom langen Abschnitt 130 ausgerichtet.

Am zweiten Teilbereich 107 weist oberseitig der erste Einbettungsabschnitt 105 eine erste Anlagefläche 109 auf. In montiertem Zustand liegt der Speichertank 25 mit der äußeren Umfangsseite 65 auf der ersten Anlagefläche 109 auf. Dabei wiwird über die Anlagefläche 109 die Gewichtskraft des Speichertanks 25 in die erste Stützeinheit 40 eingeleitet. Der kurze Abschnitt 135 versteift den ersten Einbettungsabschnitt 105 gegen eine Biegebelastung und eine wirkt gegen eine Verformung unter der Gewichtskraft.

Der erste Profilabschnitt 100 weist einen Schenkel 110 und einen Stützschenkel 125 auf. Der Schenkel 110 ist dabei im Wesentlichen in einer xz-Ebene angeordnet und ist außenseitig an dem ersten Lastträgerteil 80 auf einer zum zweiten Lastträgerteil 85 abgewandten Querseite angeordnet. Der Schenkel 110 kann plattenförmig ausgebildet sein. Vorzugsweise ist innenseitig auf der zum Speichertank 25 und dem zweiten Lastträgerteil 85 zugewandten Seite der Stützschenkel 125 angeordnet und mit dem Schenkel 110 verbunden. Der Stützschenke125 verläuft beispielhaft rechtwinklig zum Schenkel 110. Der Stützschenkel 125 kann beispielsweise plattenförmig ausgebildet sein und sich in einer xy-Ebene erstrecken. An dem Stützschenkel 125 können beispielsweise Stellfüße des Behälters 15 befestigt sein, um den Behälter 15 auf einer unebenen Fläche horizontal auszurichten und die Gewichtskraft aus dem Lastträgerteil 80, 85 auszuleiten. Oberseitig (in z-Richtung) auf der zum Speichertank 25 zugewandten Seite des Stützschenkels 125 ist der erste Einbettungsabschnitt 105 an dem Stützschenkel 125 angeordnet.

Fig. 3 zeigt eine Explosionsdarstellung der in Fig. 2 gezeigten ersten Stützeinheit 40.

Das erste Lastträgerteil 80 weist auf einer dem zweiten Lastträgerteil 85 zugewandten ersten Seite eine erste Durchgangsöffnung 165 auf. Die erste Durchgangsöffnung 165 ist beispielhaft im langen Abschnitt 130 des ersten Einbettungsabschnitts 105 angeordnet. Die erste Durchgangsöffnung 165 ist korrespondierend zu der ersten Querstrebe 90 ausgebildet.

In Querrichtung gegenüberliegend zu der ersten Durchgangsöffnung 165 weist das zweite Lastträgerteil 85 an einer zum ersten Lastträgerteil 80 gegenüberliegenden zweiten Seite eine zweite Durchgangsöffnung 170 auf. Die zweite Durchgangsöffnung 170 ist korrespondierend zu der ersten Querstrebe 90 ausgebildet. Die zweite Durchgangsöffnung 170 ist im langen Abschnitt 130 des zweiten Lastträgerteils 85 angeordnet.

Ferner weist das erste Lastträgerteil 80 eine dritte Durchgangsöffnung 175 auf. Die dritte Durchgangsöffnung 175 ist beispielhaft im langen Abschnitt 130 des ersten Einbettungsabschnitts 105 angeordnet und ist korrespondierend zu der ersten Querstrebe 90 ausgebildet.

In Querrichtung gegenüberliegend zu der dritten Durchgangsöffnung 175 weist das zweite Lastträgerteil 85 an der zum ersten Lastträgerteil 80 gegenüberliegenden zweiten Seite eine vierte Durchgangsöffnung 180 auf. Die vierte Durchgangsöffnung 180 ist korrespondierend zu der zweiten Querstrebe 95 ausgebildet. Die vierte Durchgangsöffnung 180 ist im langen Abschnitt 130 des zweiten Lastträgerteils 85 angeordnet.

In montiertem Zustand der ersten Stützeinheit 40 durchgreift die erste Querstrebe 90 die erste Durchgangsöffnung 165 an einer ersten Querseite. In Querrichtung gegenüberliegend zur ersten Querseite durchgreift die erste Querstrebe 90 an einer zweiten Querseite der ersten Querstrebe 90 die zweite Durchgangsöffnung. Die erste Querstrebe 90 kann mit dem Stützschenkel 125 verbunden, beispielsweise vernietet, sein. Ferner durchgreift in montiertem Zustand der ersten Stützeinheit 40 die zweite Querstrebe 95 die dritte Durchgangsöffnung 175 an einer ersten Querseite der zweiten Querstrebe 95. In Querrichtung gegenüberliegend zur ersten Querseite durchgreift die erste Querstrebe 90 an einer zweiten Querseite der zweiten Querstrebe 95 die vierte Durchgangsöffnung180. Die zweite Querstrebe 95 kann jeweils mit dem Stützschenkel 125 des ersten und zweiten Lastenträgerteils 80, 85 verbunden, beispielsweise vernietet, sein. Oberseitig an der ersten und/oder der zweiten Querstrebe 90, 95 kann das Ausrichtungselement 96 der ersten Stützeinheit 40 angeordnet und an der jeweiligen Querstrebe 90, 95 befestigt sein.

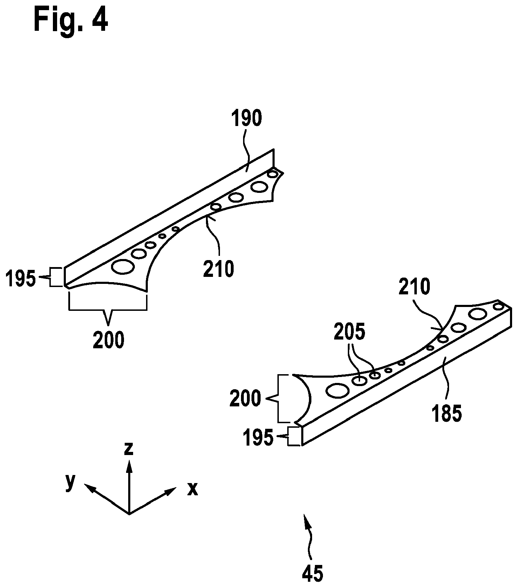

Figur 4 zeigt eine perspektivische Darstellung der zweiten Stützeinheit 45.

Die zweite Stützeinheit 45 weist ein erstes Seitenteil 185 und ein in Querrichtung gegenüberliegend angeordnetes zweites Seitenteil 190 auf. Das erste Seitenteil 185 und das zweite Seitenteil 190 sind vorzugsweise identisch zueinander ausgebildet. Beispielsweise werden das erste Seitenteil 185 und zweite Seitenteil 190 in einem Stanzbiegeverfahren hergestellt. Im Folgenden wird das erste Seitenteil 185 erläutert. Das für das erste Seitenteil 185 Erläuterte gilt entsprechend auch für das zweite Seitenteil 190.

Das erste Seitenteil 185 weist einen plattenförmig ausgebildeten Stegabschnitt 195 auf, der in einer xz-Ebene verlaufend angeordnet ist. Ferner weist das erste Seitenteil 185 einen zweiten Einbettungsabschnitt 200 auf. Der zweite Einbettungsabschnitt 200 ist mit dem Stegabschnitt 195 verbunden und erstreckt sich beispielhaft in einer xy-Ebene. In dem zweiten Einbettungsabschnitt 200 ist wenigstens eine zweite Öffnung 205, vorzugsweise mehrere zweite Öffnungen 205, angeordnet. Innenseitig auf der zum Stegabschnitt 195 abgewandten Seite weist der zweite Einbettungsabschnitt 200 eine zweite Anlagefläche 210 auf, die korrespondierend zu einer Mantelfläche des Speichertanks 25 ausgeformt ist.

Das zweite Seitenteil 190 ist um die x-Ache um 180° gedreht gegenüberliegend zu dem ersten Seitenteil 185 angeordnet, sodass der Stegabschnitt 195 nach oben vom zweiten Einbettungsabschnitt 200 weg verlaufend angeordnet ist.

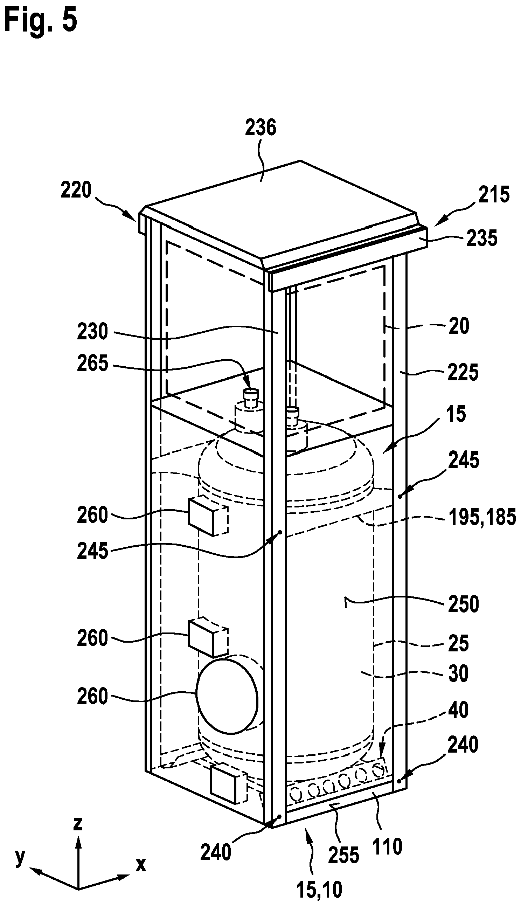

Figur 5 zeigt eine perspektivische Darstellung des Heizgeräts 15, wobei im Wesentlichen auf die Darstellung der Verkleidung 50 verzichtet wird.

Der Hauptrahmen 35 weist eine erste Trägereinheit 215 und eine in Querrichtung gegenüberliegend zur ersten Trägereinheit 215 angeordnete zweite Trägereinheit 220 auf. Die erste Trägereinheit 215 und die zweite Trägereinheit 220 sind beispielhaft im Wesentlichen identisch zueinander ausgebildet. Selbstverständlich können die beiden Trägereinheiten 215, 220 auch unterschiedlich zueinander angeordnet sein. Im Folgenden wird die erste Trägereinheit 215 erläutert. Das für die erste Trägereinheit 215 Erläuterte gilt ebenso auch für die zweite Trägereinheit 220.

Die erste Trägereinheit 215 weist ein erstes Trägerteil 225, ein zweites Trägerteil 230 und ein drittes Trägerteil 235 auf. Dabei können die Trägerteile 225, 230, 235 aus einem Profil, insbesondere einem Metallprofil, ausgeformt sein. Das erste Trägerteil 225 und das zweite Trägerteil 230 erstrecken sich in ihrer Haupterstreckungsrichtung im Wesentlichen in z-Richtung. Das dritte Trägerteil 235 erstreckt sich im Wesentlichen in x-Richtung und ist oberseitig an dem ersten Trägerteil 225 und dem zweiten Trägerteil 230 befestigt und verbindet das erste Trägerteil 255 mit dem zweiten Trägerteil 230 mechanisch. Das erste Trägerteil 225 und das zweite Trägerteil 230 erstrecken sich im Wesentlichen über die gesamte Höhe des Heizgeräts 10. Oberseitig schließt sich an das dritte Trägerteil 235 ein Verkleidungsdeckel 236 der Verkleidung 50 an.

Die erste Stützeinheit 40 ist in Querrichtung zwischen der ersten Trägereinheit 215 und der zweiten Trägereinheit 220 auf einer zum dritten Trägerteil 235 gegenüberliegenden Seite in z-Richtung angeordnet. Dabei verbindet die erste Stützeinheit 40 die erste Trägereinheit 215 und die zweite Trägereinheit 220 mechanisch. In Fig. 5 ist hierbei der Schenkel 110 mittels einer ersten mechanischen Verbindung 240 jeweils am ersten Trägerteil 225 und am zweiten Trägerteil 230 befestigt. Die erste mechanische Verbindung 240 kann beispielsweise eine Nietverbindung oder eine Schraubverbindung sein.

Etwa auf halber Höhe der ersten Trägereinheit 215 ist die zweite Stützeinheit 45 angeordnet. Die zweite Stützeinheit 45 erstreckt sich in Längsrichtung zwischen dem ersten Trägerteil 225 und dem zweiten Trägerteil 230. Das erste Seitenteil 185 ist am Stegabschnitt 195 mittels einer zweiten mechanischen Verbindung 245 mit dem ersten Trägerteil 225 und dem zweiten Trägerteil 230 verbunden. Die zweite mechanische Verbindung 245 kann beispielsweise eine Nietverbindung oder eine Schraubverbindung sein.

Die Schaumummantelung 30 weist eine erste Seitenfläche 250 auf. Die erste Seitenfläche 250 erstreckt sich im Wesentlichen in einer xz-Ebene und ist zwischen oder anschließend an das erste Trägerteil 225 und das zweiten Trägerteil 230 ausgebildet. Die erste Seitenfläche 250 kann im Wesentlichen plan ausgebildet sein.

Der Schenkel 110 weist eine zweite Seitenfläche 255 auf, die auf einer dem Speichertank 25 abgewandten Seite angeordnet ist. Die zweite Seitenfläche 255 und die erste Seitenfläche 250 können im Wesentlichen bündig ausgeführt sein.

Auch wäre es möglich, dass die zweite Seitenfläche 255 und somit der Schenkel 110 über die erste Seitenfläche 250 herausragt.

Nachfolgend wird auf das Herstellungsverfahren zur Herstellung des Behälters 15 eingegangen.

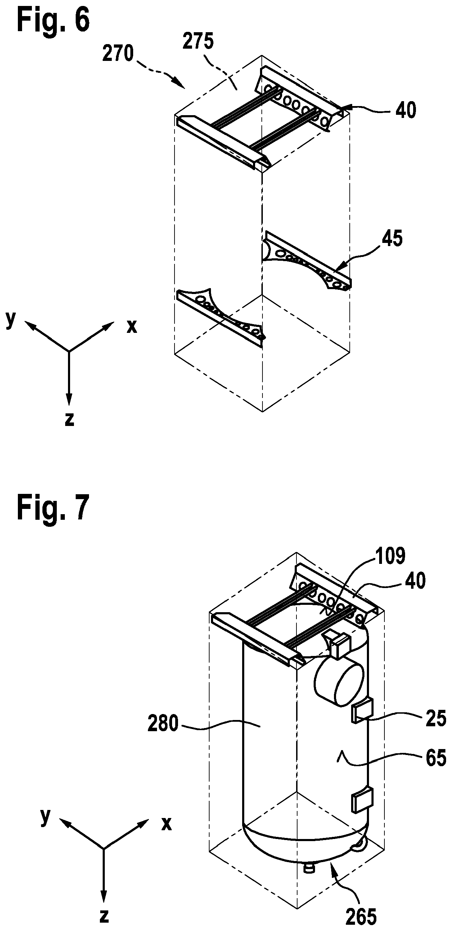

Figur 6 zeigt eine perspektivische Darstellung einer Form 270 während eines fünften Verfahrensschritts und Figur 7 zeigt die Form 270 nach einem sechsten Verfahrensschritt.

In einem ersten Verfahrensschritt werden das erste und zweite Seitenteil 185, 190 stanzgebogen. Ferner werden beispielsweise im Rahmen eines weiteren Stanz-Biege-Verfahrens das erste und zweite Lastträgerteil 80, 85 sowie die erste und zweite Querstrebe 90, 95 aus einem Blechmaterial hergestellt.

In einem auf den ersten Verfahrensschritt folgenden zweiten Verfahrensschritt werden die erste und zweite Querstrebe 90, 95 in die jeweils zugeordnete erste bis vierte Durchgangsöffnungen 165, 170, 175, 180 eingesteckt.

In einem auf den zweiten Verfahrensschritt folgendem dritten Verfahrensschritt wird beispielsweise die erste und/oder zweite Querstrebe 90, 95 mittels der Niet- oder Schraubverbindung mit dem ersten und/oder zweiten Lastträgerteil 80, 85 verbunden.

In einem vierten Verfahrensschritt wird die Form 270 bereitgestellt (vgl. Figur 6). Die Form weist einen Formraum 275 auf, wobei der Formraum 275 im Wesentlichen kubisch ausgebildet sein kann

In dem auf den vierten Verfahrensschritt folgenden fünften Verfahrensschritt werden die erste Stützeinheit 40, die zweite Stützeinheit 45 und der Speichertank 25 in den Formraum 275 eingebracht. Dabei kann der Speichertank 25 mit einer Oberseite nach unten in dem Formraum 275 orientiert eingebraucht werden, sodass eine der Heizeinrichtung 15 zugewandten Anschlussseite 265 des Speichertanks 25 unterseitig angeordnet ist. Dabei liegt der Speichertank 25 an seiner Unterseite (in Figur 7 entsprechend oberseitig am Speichertank 25) an der ersten Anlagefläche 109 des ersten und zweiten Lastträgerteils 80, 85 und an dem Ausrichtungselement 96 an. Das Ausrichtungselement 96 stellt die korrekte Ausrichtung der ersten Stützeinheit 40 relativ zum Speichertank 25 sicher. Ferner liegt die Mantelfläche der äußeren Umfangsseite 65 des Speichertanks 25 an der zweiten Anlagefläche 210 an.

In einem auf den fünften Verfahrensschritt folgenden sechsten Verfahrensschritt wird in den Formraum 275 ein Schaumwerkstoff 280 eingebracht. Der Schaumwerkstoff 280 kann beispielsweise selbstschäumend ausgebildet sein, oder kann mechanisch aufgeschäumt werden. Dabei umschließt der Schaumwerkstoff 280 den Speichertank 25 sowie die erste und zweite Stützeinheit 40, 45. Insbesondere umschließt und durchdringt der Schaumwerkstoff 280 den ersten und zweiten Einbettungsabschnitt 105, 200 und durchdringt die erste und zweite Öffnung 120, 205. Beim Aufschäumen quillt der Schaumwerkstoff 280 auf und passt sich selbständig an die Form der ersten und zweiten Stützeinheit 40, 45 aber auch des Speichertanks 25 an. Während des Aufschäumens des Schaumwerkstoffs 280 verhindert die Form 270, dass der Schaumwerkstoff 280 in eine ungewollte Richtung aufquillt. Dabei bildet der Schaumwerkstoff 280 die erste stoffschlüssige Verbindung 70 an der äußeren Umfangsseite 65 und die zweite stoffschlüssige Verbindung 75 an der Stützeinheit 40, 45 aus.

In einem auf den sechsten Verfahrensschritt folgenden siebten Verfahrensschritt wird der Schaumwerkstoff 280 zu der Schaumummantelung 30 ausgehärtet. Dabei bildet die Schaumummantelung 30 beim Aushärten die indirekte mechanische Verbindung zwischen der ersten Stützeinheit 40 und dem Speichertank 25 sowie zwischen der zweiten Stützeinheit 45 und dem Speichertank 25 aus.

In einem auf den siebten Verfahrensschritt folgenden achten Verfahrensschritt wird die Form 270 entfernt oder der Behälter 15 zusammen mit der Schaumummantelung 30 und den Stützeinheiten 40, 45 aus dem Formraum 275 entfernt und der Verbund um 180° um die x-Achse gedreht und in eine Aufstellposition verbracht.

In einem auf den achten Verfahrensschritt folgenden neunten Verfahrensschritt werden an der ersten Stützeinheit 40 und der zweiten Stützeinheit 45 die erste und zweite Trägereinheit 215, 220 mittels der ersten und zweiten Verbindung 240, 245 mechanisch befestigt.

In einem auf den neunten Verfahrensschritt folgenden zehnten Verfahrensschritt wird die Heizeinrichtung 20, sofern vorgesehen, ebenso in dem Hauptrahmen 35 positioniert und an dem Hauptrahmen 35 befestigt. Ferner wird im zehnten Verfahrensschritt die Heizeinrichtung 20 an den Speichertank 25 mittels nicht dargestellter Fluidleitungen angeschlossen. Ferner wird eine Elektrik der Heizeinrichtung 20 und/oder eine Sensorik des Behälters 15 montiert.

In einem auf den zehnten Verfahrensschritt folgenden elften Verfahrensschritt wird die Verkleidung 50 an dem Hauptrahmen 35 befestigt und die Herstellung des Heizgeräts 10 ist nach dem elften Verfahrensschritt abgeschlossen.

Der oben beschriebene Behälter 15 und das beschriebene Herstellungsverfahren haben den Vorteil, dass der Behälter 15 besonders leicht ist. Gleichzeitig wird ein mechanisch besonders robuster Behälter 15 bereitgestellt, der aufgrund seiner geringen Anzahl von Verfahrensschritten besonders kostengünstig hergestellt werden kann. Durch das Umschäumen des Speichertanks 25 mit der Schaumummantelung 30 und der dabei entstehenden indirekten mechanischen Verbindung zwischen der Stützeinheit 40, 45 und dem Speichertank 25 kann in der Montage des Behälters 15 der Speichertank 25 zusammen mit der Schaumummantelung 30 und der Stützeinheit 40, 45 auf einfache Art und Weise transportiert werden, ohne dass sich die Stützeinheit 40, 45 von dem Speichertank 25 lösen kann. Ferner wird durch das integrale Ausgestalten des Behälters 15 mit der Schaumummantelung 30 sichergestellt, dass die Schaumummantelung 30 besonders gut den Speichertank 25 thermisch gegenüber der Umgebung 60 isoliert. Ferner ist der Materialeinsatz zur Herstellung des Behälters 15 besonders gering.

Um einen Zugang zu bestimmten Komponenten des Speichertanks 25, insbesondere in einem Innenraum des Speichertanks 25 oder zu einer Sensorik des Behälters 15, sicherzustellen, können ein oder mehrere Wartungszugänge 260 in der Schaumummantelung 30 vorgesehen sein. Diese können beispielsweise als getrennte Deckel aus dem Schaumwerkstoff ausgebildet sein.

## Patentansprüche

1. Behälter (15) für ein Heizgerät (10),
aufweisend einen Speichertank (25), der mit Wasser, insbesondere mit Warmwasser oder mir Kaltwasser, füllbar ist, eine Schaumummantelung (30) zur thermischen Isolierung des Speichertanks (25) und eine erste Stützeinheit (40), wobei die erste Stützeinheit (40) an dem Speichertank (25) anliegt und ausgebildet ist, eine Gewichtskraft des Speichertanks (25) zumindest teilweise abzustützen, wobei der Speichertank (25) und die erste Stützeinheit (40) zumindest abschnittsweise in der Schaumummantelung (30) eingebettet sind, wobei die Schaumummantelung (30) die erste Stützeinheit (40) an dem Speichertank (25) fixiert.

2. Behälter (15) nach Anspruch 1,
aufweisend eine zweite Stützeinheit (45), wobei die zweite Stützeinheit (45) versetzt zu der ersten Stützeinheit (40) angeordnet und seitlich neben dem Speichertank (25) angeordnet ist, wobei die zweite Stützeinheit (45) an einer äußeren Umfangsseite (65) des Speichertanks (25) anliegt, wobei die zweite Stützeinheit (45) in der Schaumummantelung (30) zumindest abschnittsweise eingebettet ist und die Schaumummantelung (30) die zweite Stützeinheit (45) an dem Speichertank (25) befestigt.

3. Behälter (15) nach einem der vorhergehenden Ansprüche,
wobei die erste Stützeinheit (40) ein erstes Lastträgerteil (80) und ein versetzt zu dem ersten Lastträgerteil (80) angeordnetes zweites Lastträgerteil (85) sowie wenigstens eine erste Querstrebe (90) aufweist, wobei das erste Lastträgerteil (80) auf einer dem zweiten Lastträgerteil (85) zugewandten ersten Seite eine erste Durchgangsöffnung (165) und das zweite Lastträgerteil (85) auf einer dem ersten Lastträgerteil (80) zugewandten zweiten Seite eine zweite Durchgangsöffnung (170) aufweist, wobei die erste Querstrebe (90) an einer ersten Querseite die erste Durchgangsöffnung (165) durchgreift und an einer zur ersten Querseite gegenüberliegenden zweiten Querseite die zweite Durchgangsöffnung (170) durchgreift, wobei die erste Querstrebe (90) auf dem ersten Lastträgerteil (80) und auf dem zweiten Lastträgerteil (85) aufliegt und das erste Lastträgerteil (80) mit dem zweiten Lastträgerteil (85) verbindet.

4. Behälter (15) nach Anspruch 3,
wobei die erste Stützeinheit (40) eine zweite Querstrebe (95) aufweist, wobei die zweite Querstrebe (95) versetzt zu der ersten Querstrebe (90) angeordnet ist, wobei das erste Lastträgerteil (80) auf der dem zweiten Lastträgerteil (85) zugewandten ersten Seite eine dritte Durchgangsöffnung (175) und das zweite Lastträgerteil (85) auf der dem ersten Lastträgerteil (80) zugewandten zweiten Seite eine vierte Durchgangsöffnung (180) aufweist, wobei die zweite Querstrebe (95) an einer dritten Querseite die dritte Durchgangsöffnung (175) durchgreift und an einer zur dritten Querseite gegenüberliegenden vierten Querseite die vierte Durchgangsöffnung (180) durchgreift, wobei die zweite Querstrebe (95) in der dritten Durchgangsöffnung (175) auf dem ersten Lastträgerteil (80) und in der vierten Durchgangsöffnung (180) auf dem zweiten Lastträgerteil (85) aufliegt und das erste Lastträgerteil (80) mit dem zweiten Lastträgerteil (85) verbindet.

5. Behälter (15) nach Anspruch 3 oder 4,
wobei die erste Querstrebe (90) ein U-Profil aufweist, wobei die erste Querstrebe (90) vorzugsweise derart ausgerichtet ist, dass das U-Profil auf der zum Speichertank (25) zugewandten Seite offen ist.

6. Behälter (15) nach einem der vorhergehenden Ansprüche,
wobei die Schaumummantelung (30) eine erste Seitenfläche (250) aufweist, wobei das erste Lastträgerteil (80) eine zweite Seitenfläche (255) aufweist, die bündig mit der ersten Seitenfläche (250) abschließt.

7. Behälter (15) nach einem der vorhergehenden Ansprüche,
wobei die Schaumummantelung (30) stoffschlüssig mit einer äußeren Umfangsseite (65) des Speichertanks (25) verbunden ist, wobei die Schaumummantelung (30) stoffschlüssig mit der ersten Stützeinheit (40) verbunden ist.

8. Behälter (15) nach einem der Ansprüche 2 bis 7,
wobei die Schaumummantelung (30) stoffschlüssig mit einer äußeren Umfangsseite (65) des Speichertanks (25) verbunden ist, wobei die Schaumummantelung (30) stoffschlüssig mit der zweiten Stützeinheit (45) verbunden ist.

9. Behälter (15) nach einem der vorhergehenden Ansprüche,
aufweisend einen Hauptrahmen (35) mit einer ersten Trägereinheit (215) und einer zweiten Trägereinheit (220), wobei der Speichertank (25) zwischen der ersten Trägereinheit (215) und der zweiten Trägereinheit (220) angeordnet ist, wobei sich die erste Stützeinheit (40) zwischen der ersten Trägereinheit (215) und der zweiten Trägereinheit (220) angeordnet ist, wobei das erste Lastträgerteil (80) an der ersten Trägereinheit (215) und das zweite Lastträgerteil (85) an der zweiten Trägereinheit (220) befestigt ist und die erste Stützeinheit (40) die erste Trägereinheit (215) mit der zweiten Trägereinheit (220) mechanisch verbindet.

10. Heizgerät (10), insbesondere Standgerät,
aufweisend einen Behälter (15) nach einem der vorhergehenden Ansprüche und eine Heizeinrichtung (20), wobei die Heizeinrichtung (20) ausgebildet ist, das Wasser zu erwärmen und dem Speichertank (25) zuzuführen, wobei die Heizeinrichtung (20) versetzt zu dem Speichertank (25) auf einer der ersten Stützeinheit (40) abgewandten Seite angeordnet ist, wobei die Heizeinrichtung (20) vorzugsweise eine Wärmepumpe aufweist.

11. Verfahren zur Herstellung eines Behälters (15) nach einem der vorhergehenden Ansprüche,
wobei der Speichertank (25) und die erste Stützeinheit (40) bereitgestellt werden, wobei der Speichertank (25) und die erste Stützeinheit (40) in eine Form (270) derart eingebracht werden, dass die erste Stützeinheit (40) an dem Speichertank (25) anliegt, wobei in die Form (270) ein Schaumwerkstoff (280) eingebracht wird, wobei der Schaumwerkstoff (280) aufschäumt und/oder aufgeschäumt wird, wobei der Schaumwerkstoff (280) den Speichertank (25) und die erste Stützeinheit (40) zumindest abschnittsweise umschließt, wobei der Schaumwerkstoff (280) zu der Schaumummantelung (30) ausgehärtet wird und die Schaumummantelung (30) die erste Stützeinheit (40) mechanisch an dem Speichertank (25) fixiert.
